# EUROPÄISCHE PATENTSCHRIFT

(11) **EP 0 607 482 B1**
(45) Veröffentlichungstag und Bekanntmachung des Hinweises auf die Patenterteilung: **07.05.1997**
(21) Anmeldenummer: 93100790.0
(22) Anmeldetag: 20.01.1993
(51) Int. Cl.: G01L 7/08, G01L 19/06

(54) **Druckmittler**
Pressure transmitter
Transmetteur de pression

(43) Veröffentlichungstag der Anmeldung: 27.07.1994
(73) Patentinhaber: WIKA ALEXANDER WIEGAND GmbH & CO., D-63911 Klingenberg (DE)
(72) Erfinder: Hörning, Udo, W-8761 Eichenbühl (DE); Wiessler, Theo, W-8763 Klingenberg (DE)
(74) Vertreter: Tiedtke, Harro, Dipl.-Ing.

(56) Entgegenhaltungen:
- DD-A- 133 364
- US-A- 3 635 089
- WO-A1-93-1480
- H. Julien, "Kompaktseminar über Druckmittler", NAMUR-Arbeitskreis 4.4 - Lehrmittel (Medien für die PLT-Information und -Instruktion), München (DE) 1990, Seite 16

## Beschreibung

Die vorliegende Erfindung betrifft einen Druckmittler gemäß Oberbegriff des Patentanspruchs 1.

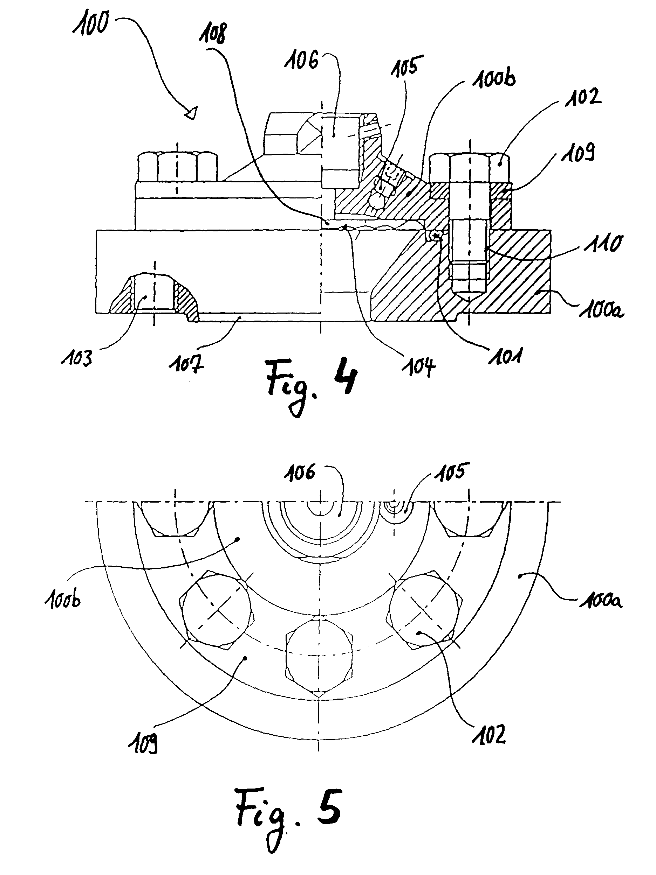

Ein derartiger Druckmittler ist bekannt (H. Julien : "Kompaktseminar über Druckmittler", R. Oldenbourg Verlag, 1990) und in den Figuren 4 und 5 dargestellt. Der dort gezeigte im wesentlichen zylindrische Druckmittler weist ein Gehäuse 100 auf, das aus mehreren Teilen aufgebaut ist, nämlich aus einem Flanschteil 100a und einem am Flanschteil 100a mittels Schrauben 102 verschraubten, zunächst vom Flanschteil getrennt gefertigten Oberteil 100b. Die Dichtheit zwischen diesen beiden Bauteilen des Druckmittlers wird durch eine Dichtung 101 sichergestellt. Auf der vom Oberteil 100b abgewandten Seite des Flanschteils 100a (unten in Fig. 4) sind Gewindebohrungen 103 im Flanschteil 100a angeordnet, die es ermöglichen, den Druckmittler an ein einen Meßstoff führendes bzw. enthaltendes System mittels Schrauben (nicht dargestellt) anzuflanschen.

Der Begriff "Flanschteil" wird im Rahmen dieser Beschreibung zur Bezeichnung desjenigen Teils Teils verwendet, mit dessen Hilfe der gesamte Druckmittler an seinem Einbauort angeflanscht wird.

Innerhalb des Gehäuses 100 ist eine Membran 104 angeordnet, die am Oberteil 100b anliegt und dort angeschweißt ist (nicht dargestellt). Die Membran 104 trennt den Innenraum des Druckmittlers in einen im Oberteil 100b ausgebildeten, ersten Druckraum 108, der mit einer Füllflüssigkeit gefüllt ist und mittels einer Bohrung 106 in Verbindung mit einem anzuschließenden Druckmeßgerät (nicht gezeigt) steht, und einen dem Meßstoff zugewandten, zweiten Druckraum 107.

Die Positionierung des Flanschteils 100a und des Oberteils 100b erfolgt bei der Verschraubung mit den Schrauben 102 über ein kreisringförmiges Spannteil 109.

Am Oberteil 100b ist weiterhin eine Gewindebohrung mit Verschlußschraube 105 vorgesehen, welche in Verbindung zum Druckraum 108 zum Füllen mit Füllflüssigkeit dient.

Ein solcher Druckmittler wird zum Übertragen eines zu messenden Druckes vom Meßstoff zur Füllflüssigkeit und schließlich zum Druckmeßgerät eingesetzt. Handelt es sich beim Meßstoff um ein aggressives und/oder hochviskoses und/oder kristallisierendes und/oder heißes Medium, so werden üblicherweise besondere Vorkehrungen getroffen werden, um die Funktionsfähigkeit des Druckmittlers aufrecht zu erhalten.

Beim Druckmittler nach dem Stand der Technik sind dazu die Membran 104 und der Flanschteil 100a vollständig aus einem dem Meßstoff angepaßten Sondermaterial, zum Beispiel einem korrosionsbeständigem Material gefertigt.

Da der vollständige Flanschteil 100a aus diesem Sondermaterial hergestellt ist, ist die Fertigung teuer; zudem müssen im Flanschteil 100a eine Vielzahl von Gewindebohrungen 103 und 110, sowohl auf der Unter- als auch auf der Oberseite angebracht werden, wodurch die Herstellung kompliziert und kostspielig ist.

Ein weiterer Nachteil des bekannten Druckmittlers liegt darin, daß die Membran 104 am Oberteil 100b angeschweißt ist, wobei diese beiden Teile aus zwei unterschiedlichen Werkstoffen bestehen; dies führt zu Problemen beim Schweißen.

Durch die Veröffentlichung WO-A-9 301 480 gehört für die Vertragsstaaten Deutschland und Frankreich ein Druckmittler mit folgenden Merkmalen zum Stand der Technik gemäß Art. 54(3) EPÜ. Dieser Druckmittler zum Übertragen eines zu messenden Druckes von einem Meßstoff zu einem Druckmeßgerät weist auf ein Gehäuse und eine dem Meßstoff ausgesetzte Membran, wobei die Membran einen zum Meßstoff offenen Druckraum begrenzt, der von einem dem Meßstoff angepaßten Sondermaterial umgeben ist. Das Gehäuse weist einen Flanschabschnitt auf. Meßstoffseitig ist am Gehäuse ein Einsatz befestigt, der aus einem mit dem Meßstoff angepaßten Sondermaterial besteht, und die Membran ist an diesem Einsatz angeschweißt. Auf der vom Einsatz abgewandten Seite ist an der Membran ein Stützring aus einem dem Meßstoff angepaßten Sondermaterial angeschweißt, wobei dieser Stützring am Gehäuse angelötet ist.

Es ist die Aufgabe der Erfindung, einen Druckmittler gemäß Oberbegriff des Patentanspruchs 1 zu schaffen, bei dem die Herstellung vereinfacht ist und die Verwendung von Sondermaterial reduziert ist.

Diese Aufgabe wird durch die im kennzeichnenden Teil des Patentanspruchs 1 angegebenen Merkmale gelöst.

Ein Vorteil der Erfindung liegt darin, daß nunmehr montagefreundliche Durchgangsbohrungen zum Anflanschen des Druckmittlers vorhanden sind. Darüberhinaus entfällt das Bohren und Gewindeschneiden im Sondermaterial vollständig.

Die einteilige Ausführung des Gehäuses sorgt für den Wegfall einer Dichtung und eines Spannteils, die beim Stand der Technik zur Abdichtung und Verschraubung eingesetzt wurden.

Ein weiterer Vorteil ist, daß die Klebe- bzw. Schweißnaht zwischen Membran und Einsatz nun an materialeinheitlichen Teilen angebracht wird, wodurch die Klebung bzw. Schweißung einfacher und korrosionsbeständiger ist.

Darüberhinaus wird vom Sondermaterial weniger benötigt, weil nun nicht mehr der vollständige Flanschteil aus Sondermaterial (Stand der Technik) besteht, sondern weil nur noch der Einsatz bzw. dessen Oberfläche aus Sondermaterial besteht.

Vorteilhafte Weiterbildungen der Erfindung ergeben sich aus den Unteransprüchen.

Die Erfindung wird im folgenden anhand der Zeichnungen, die zwei Ausführungsbeispiele zeigen, ausführlich dargestellt.

Es zeigen:
Fig. 1 einen Querschnitt durch einen erfindungsgemäßen Druckmittler gemäß einer ersten Ausführungsform;
Fig. 2 einen vergrößerten Teil-Querschnitt des Druckmittlers aus Fig. 1 (Bereich "Z");
Fig. 3 einen vergrößerten Teil-Querschnitt einer zweiten Ausführungsform;
Fig. 4 eine teilweise aufgebrochene Ansicht eines Druckmittlers nach dem Stand der Technik;
Fig. 5 eine teilweise Aufsicht-Darstellung des Druckmittlers nach Fig. 4.

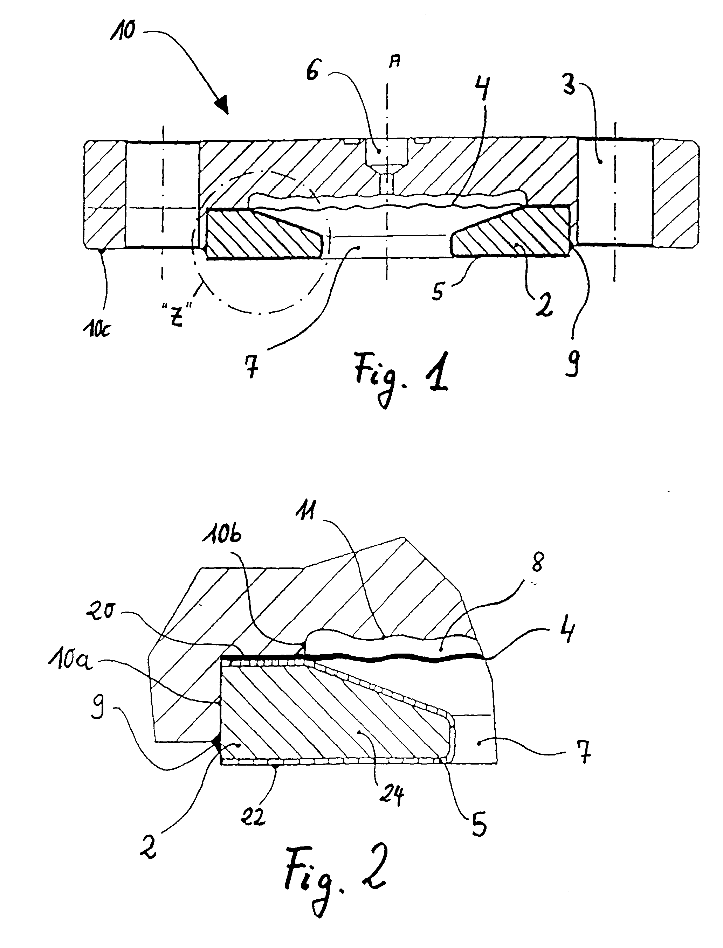

Unter Bezugnahme auf die Fig. 1 und 2 wird nun ein erstes Ausführungsbeispiel der vorliegenden Erfindung näher erläutert.

Der Druckmittler weist ein einteiliges Gehäuse 10 auf, das im wesentlichen zylindrisch ist und über eine Vielzahl von (Durchgangs-) Bohrungen 3 verfügt, die symmetrisch über den Umfang verteilt sind. Die Bohrungen 3 sind radial außenliegend bei etwa 3/4 des Radius angeordnet.

Das einteilige Gehäuse 10 übernimmt die Funktionen des aus dem Stand der Technik bekannten Flanschteils und des Oberteils. Der radial äußere, ringförmige Gehäuseabschnitt mit den Bohrungen 3 bildet den Flanschteil des Gehäuses und dient dem Anflanschen an ein einen Meßstoff führendes System. Meßstoffseitig (unten in Fig. 1) weist das Gehäuse 10 zwei kreisförmige Ausnehmungen 10a und 10b auf, von denen die erste Ausnehmung 10a einen Durchmesser hat, der sich bis nahe an die Bohrungen 3 erstreckt und sich axial bis zum Rand des Gehäuses 10 erstreckt, während die zweite Ausnehmung 10b einen kleineren Durchmesser hat und sich axial nach innen an die erste Ausnehmung 10a anschließt.

Die erste Ausnehmung 10a dient zur Aufnahme eines Einsatzes 2, der in der Aufsicht kreisringförmig ausgebildet ist. In der in den Figs. 1 und 2 gezeigten Schnittebene, in der die Achse "A" des zylindrischen Gehäuses 10 liegt, hat der Einsatz 2 einen sich radial nach innen verjüngenden Abschnitt, während der Einsatz 2 radial außen parallel zueinander verlaufende Ober- und Unterseiten 20 bzw. 22 aufweist. Die Verjüngung verläuft unter einem Winkel von etwa 20° von der Oberseite 20 in Richtung zur Unterseite des Einsatzes 2.

Der Einsatz 2 ist in die erste Ausnehmung 10a eingefaßt. Die Unterseite 22 des vollständig eingesetzen Einsatzes 2 ragt etwas über die Unterseite 10c des Gehäuses 10 heraus und bildet eine Dichtfläche, wenn der Druckmittler am den Meßstoff führenden System angeflanscht wird.

Der Einsatz 2 ist im Bereich des Übergangs von seiner Mantelfläche zur Unterseite des Gehäuses 10 an diesem durch eine Kehlnaht 9 angeschweißt.

An den parallelen Ober- 20 und Unterseiten 22, sowie an den Oberflächen des sich verjüngenden Abschnitts weist der Einsatz 2 eine korrosionsbeständige Sondermaterialschicht 5 auf, so daß die gesamte Oberfläche des Einsatzes 2 mit Ausnahme seiner radial äußeren Mantelfläche geschützt ist. Die Sondermaterialschicht 5 schützt den Einsatz 2 beispielsweise vor einem aggressiven Meßstoff, wobei die Sondermaterialschicht 5 am Kern 24 des Einsatzes 2 mittels Schweißung angebracht ist.

Am Einsatz 2 ist an der Oberseite 20 eine Membran 4 angeordnet, die mit der korrosionsbeständigen Sondermaterialschicht 5 des Einsatzes 2 verschweißt ist und im Ausführungsbeispiel ebenfalls aus dem gleichen korrosionsbeständigem Material besteht.

Die Wand der zweiten Ausnehmung 10b definiert zusammen mit der Membran 4 einen ersten Druckraum 8. Der erste Druckraum 8 steht mittels einer Bohrung 6 (und eventuell einer nicht dargestellten Zuleitung) mit einem Druckmeßgerät (nicht gezeigt) in Verbindung und ist vollständig mit einer Füllflüssigkeit gefüllt. Die Membran 4 und der Einsatz 2 begrenzen einen zweiten Druckraum 7, der mit dem den Meßstoff führenden System in Verbindung steht und auf der dem ersten Druckraum 8 gegenüberliegenden Seite der Membran 4 liegt.

Sollte der zu messende Druck einen für die Membran 4 unzulässig hohen Wert annehmen, so wird eine unzulässige Durchbiegung der Membran 4 durch ein Membranbett 11 verhindert, das durch die Stirnwand der zweiten Ausnehmung 10b gebildet ist. Dadurch kann die Membran 4 bis zu bestimmten Grenzen vor Beschädigung geschützt werden.

Je nach Agressivität und Art des Meßstoffes bestehen die Sondermaterialschicht 5 und die Membran 4 beispielsweise aus folgenden Werkstoffen: CrNi-Stahl 1.4571, Titan, Hastelloy, Monel, Nickel, Inconell oder Tantal. Die Sondermaterialschicht 5 und die Membran 4 können jedoch auch lediglich mit folgenden Materialien beschichtet sein: Silber, Gold, PTFE (Teflon), PFA (Perfluor-Alkoxy-Polymere) oder ECTFE (Polyethylen-co-trifluorethylen). Die vorstehend genannten Materialien sind Beispiele für dem Meßstoff angepaßte Sondermaterialien, deren Zweck es ist, die Funktionsfähigkeit des Druckmittlers unter Berücksichtigung der Meßstoffeigenschaften zu gewährleisten und/oder zu verbessern.

Die im ersten Druckraum 8 und in der zum Druckmeßgerät führenden Zuleitung (nicht dargestellt) benutzte Füllflüssigkeit ist beispielsweise Silikonöl KN 2 (-20°C ... +200°C). Je nach Prozeßbedingungen können auch andere Füllflüssigkeiten verwendet werden.

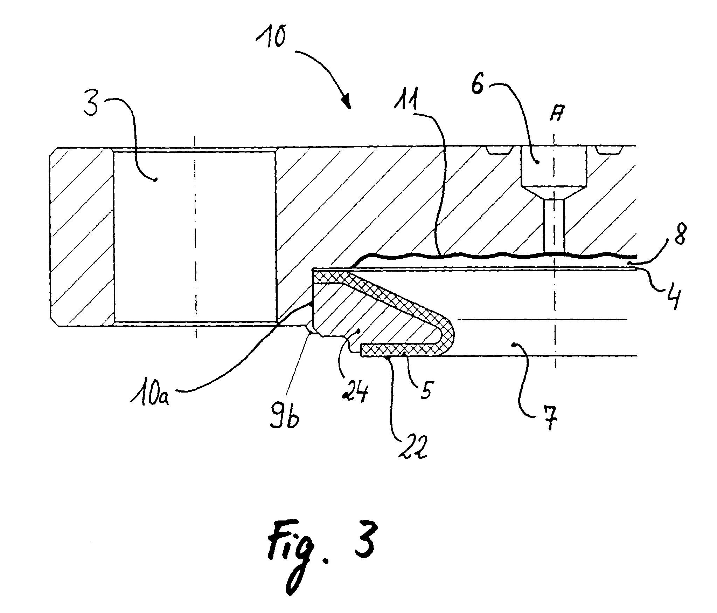

In Fig. 3 ist ein zweites Ausführungsbeispiel gezeigt, bei dem die Sondermaterialschicht 5 aus PTFE besteht. Die Sondermaterialschicht 5 wird bei der Herstellung als Schlauch durch den Kern 24 hindurch gesteckt und im Anschluß durch Warmumformung an die Kontur des Kerns 24 angepaßt.

Die Membran 4 aus PTFE wird hier entweder mit der Sondermaterialschicht 5 verklebt oder nur eingelegt, so daß sie zwischen dem Einsatz 2 und dem Gehäuse 10 eingeklemmt wird. Über eine Bördelverbindung 9b wird der Einsatz 2 am Gehäuse 10 befestigt.

Bei einem dritten Ausführungsbeispiel (nicht gezeigt) kann der Einsatz auch vollständig aus Sondermaterial gefertigt sein, sowie der Einsatz auch bündig mit der Unterseite des Gehäuses abschließen kann, falls die Gegenseite (am Meßstoff führenden System) beim Anflanschen dann eine entsprechende Dichtfläche zur Verfügung stellt.

Es ergeben sich folgende Vorteile:
. durch die zylindrische Gestalt des Gehäuses 10 eine einfache und kostengünstige Herstellung (Drehteil);
. Durchgangsbohrungen 3 sind einfach zu fertigen und ohne Toleranzprobleme;
. Kehlnaht 9 beim gezeigten ersten Ausführungsbeispiel an materialeinheitlichen Bauteilen; somit einfache und korrosionsbeständige Schweißnaht;
. absolut dichter Abschluß des Druckraumes 7 infolge korrosionsbeständiger Verschweißung oder Verklebung oder Klemmung der Membran 4 am Einsatz 2;
. der Verbrauch an Sondermaterial ist gegenüber dem Stand der Technik deutlich reduziert, da die Sondermaterialschicht 5 bzw. der Einsatz 2 ein wesentlich kleineres Volumen als das Flanschteil 100a (Fig. 3) haben;
. keine Dichtprobleme zwischen Gehäusebauteilen, da einteilig;
. geringere Außenabmessungen des Druckmittlers im Vergleich zum Stand der Technik;
. die Schweißung zwischen der Membran und dem Einsatz erfolgt an materialeinheitlichen Bauteilen und weist somit die daraus resultierenden Vorteile auf.

## Patentansprüche

1. Druckmittler zum Übertragen eines zu messenden Druckes von einem Meßstoff zu einem Druckmeßgerät, mit einem Gehäuse (10) und mit einer dem Meßstoff ausgesetzten Membran (4), wobei im Gehäuse (10) eine einen ersten Druckraum (8) bildende Ausnehmung (10b) ausgebildet ist und wobei die Membran (4) an einer die Ausnehmung (10b) umgebenden Schulter des Gehäuses (10) anliegt und auf ihrer vom ersten Druckraum (8) abgewandten Seite einen zum Meßstoff offenen zweiten Druckraum (7) begrenzt, der vollständig von einem dem Meßstoff angepaßten Sondermaterial umgeben ist,
**dadurch gekennzeichnet,** daß das Gehäuse (10) einteilig ausgebildet ist, daß das einteilige Gehäuse (10) einen Flanschabschnitt zum Anflanschen an ein den Meßstoff führendes System aufweist, daß meßstoffseitig am Gehäuse (10) ein Einsatz (2) befestigt ist, wobei zumindest dessen dem Meßstoff ausgesetzte Oberfläche aus einem dem Meßstoff angepaßten Sondermaterial besteht, und daß die Membran (4) an dem Einsatz (2) angeschweißt oder angeklebt ist oder zwischen dem Einsatz (2) und der Schulter des Gehäuses (10) eingeklemmt ist.

2. Druckmittler nach Anspruch 1, **dadurch gekennzeichnet, daß** das Gehäuse (10) eine im wesentlichen zylindrische Gestalt aufweist und **daß** über den Umfang symmetrisch verteilt eine Vielzahl von Bohrungen (3) vorgesehen sind.

3. Druckmittler nach Anspruch 1 oder 2, **dadurch gekennzeichnet, daß** der Einsatz (2) eine im wesentlichen kreisringförmige Form aufweist und radial außen eine parallel verlaufende Ober- (20) und Unterseite (22) hat, sowie radial innen einen sich zum Innenumfang hin verjüngenden Abschnitt.

4. Druckmittler nach Anspruch 3, **dadurch gekennzeichnet, daß** der sich zum Innenumfang hin verjüngende Abschnitt des Einsatzes (2) sich unter einem Winkel von etwa 20° verjüngt.

5. Druckmittler nach einem der Ansprüche 1 bis 4, **dadurch gekennzeichnet, daß** der Einsatz (2) einen Kern (24) sowie zumindest dessen dem Meßstoff ausgesetzte Oberfläche eine Sondermaterialschicht (5) aufweist.

6. Druckmittler nach einem der Ansprüche 1 bis 4, **dadurch gekennzeichnet, daß** der Einsatz (2) vollständig aus Sondermaterial besteht.

7. Druckmittler nach einem der Ansprüche 1 bis 6, **dadurch gekennzeichnet, daß** der Einsatz (2) im Bereich des Übergangs von der Unterseite (10c) des Gehäuses (10) zu einem axial über das Gehäuse (10) vorstehenden Teil des Einsatzes (2) mittels einer Kehlnaht (9) verschweißt oder verklebt ist.

8. Druckmittler nach einem der Ansprüche 1 bis 6, **dadurch gekennzeichnet, daß** der Einsatz (2) im Bereich des Übergangs von der Unterseite (10c) des Gehäuses (10) zu einem axial über das Gehäuse (10) vorstehenden Teil des Einsatzes (2) mittels einer Bördelverbindung (9b) befestigt ist.

9. Druckmittler nach einem der Ansprüche 2 bis 8, **dadurch gekennzeichnet, daß** der Außendurchmesser des Einsatzes (2) kleiner ist als der Innendurchmesser, der durch die radial innenliegenden Wandabschnitte der Bohrungen (3) gebildet wird.

10. Druckmittler nach Anspruch 7, **dadurch gekennzeichnet, daß** die axial über das Gehäuse (10) vorstehende Unterseite (22) des Einsatzes (2) als Dichtfläche ausgebildet ist.

11. Druckmittler nach einem der Ansprüche 1 bis 10, **dadurch gekennzeichnet, daß** das Sondermaterial Titan, Hastelloy, Monel, Nickel, Inconell oder Tantal ist.

12. Druckmittler nach einem der Ansprüche 1 bis 10, **dadurch gekennzeichnet, daß** die Sondermaterialschicht (5) aus Silber, Gold, PTFE (Teflon), PFA oder ECTFE besteht.

## Claims

1. A pressure transmitter for transmitting a pressure to be measured from a measured substance to a pressure measuring device, comprising a housing (10) and a diaphragm (4) exposed to the measured substance, wherein a recess (10b) forming a first pressure chamber (8) is provided in said housing (10) and wherein said diaphragm (4) abuts on a shoulder of said housing (10) surrounding said recess (10b) and defines a second pressure chamber (7) open towards the measured substance at its side turned away from said first pressure chamber (8), said second pressure chamber (7) being completely surrounded by a special material adapted to the measured substance,
**characterized in that**
said housing (10) is formed as a unit, **that** said unitary housing (10) has a flange section for flanging on a system guiding the measured substance, **that**, on the side of the measured substance, an insert (2) is mounted to said housing (10), wherein at least the surface of said insert (2) exposed to the measured substance consists of a special material adapted to the measured substance, **and that** said diaphragm (4) is welded to said insert (2) or glued thereto or is clamped between said insert (2) and the shoulder of said housing (10).

2. A pressure transmitter according to claim 1,
**characterized in that**
said housing (10) has a substantially cylindrical shape **and that** a plurality of boreholes (3) are provided symmetrically distributed over the circumference.

3. A pressure transmitter according to claim 1 or 2,
**characterized in that**
said insert (2) has a substantially annular shape and a parallelly running upper (20) and lower side (22) radially outwardly as well as a section tapering towards the inner circumference radially inwardly.

4. A pressure transmitter according to claim 3,
**characterized in that**
the section of said insert (2) tapering towards the inner circumference tapers under an angle of 20° approximately.

5. A pressure transmitter according to any of claims 1 to 4,
**characterized in that**
said insert (2) has a core (24) and at least its surface exposed to the measured substance has a special material layer (5).

6. A pressure transmitter according to any of claims 1 to 4,
**characterized in that**
said insert (2) completely consists of a special material.

7. A pressure transmitter according to any of claims 1 to 6,
**characterized in that**
said insert (2) is welded or glued by means of a fillet weld (9) in the area of the transition from said lower side (10c) of said housing (10) to a part of said insert (2) which projects axially from said housing (10).

8. A pressure transmitter according to any of claims 1 to 6,
**characterized in that**
said insert (2) is mounted by means of an beaded connection (9b) in the area of the transition from said lower side (10c) of said housing (10) to a part of said insert (2) projecting axially from said housing (10).

9. A pressure transmitter according to any of claims 2 to 8,
**characterized in that**
the outer diameter of said insert (2) is smaller than the inner diameter formed by the wall sections of said boreholes (3) lying radially inwardly.

10. A pressure transmitter according to claim 7,
**characterized in that**
said lower side (22) of said insert (2) axially projecting from said housing (10) is formed as a sealing surface.

11. A pressure transmitter according to any of claims 1 to 10,
**characterized in that**
said special material is titanium, Hastelloy, Monel, nickel, Inconell or tantalum.

12. A pressure transmitter according to any of claims 1 to 10,
**characterized in that**
said special material layer (5) consists of silver, gold, PTFE (Teflon), PFA or ECTFE.

## Revendications

1. Transmetteur de pression pour la transmission d'une pression à mesurer d'un agent de mesurage à un appareil de mesure de pression, équipé d'un boîtier (10) et d'une membrane (4) exposée à l'agent de mesurage, une cavité (10b) formant un premier compartiment de pression (8) étant formée dans le boîtier (10) et la membrane (4) étant contiguë à un épaulement entourant la cavité (10b) et délimitant sur son côté opposé au premier compartiment de pression (8) un deuxième compartiment de pression (7) ouvert sur l'agent de mesurage, qui est entouré complètement par un matériau spécial adapté à l'agent de mesurage, caractérisé en ce que le boîtier (10) est réalisé d'une seule pièce, en ce que le boîtier (10) d'une seule pièce présente une partie de bride pour le raccordement par bride à un système guidant l'agent de mesurage, en ce qu'un insert (2) est fixé côté agent de mesurage sur le boîtier (10), insert dont au moins la surface exposée à l'agent de mesurage est à base d'un matériau spécial adapté à l'agent de mesurage, et en ce que la membrane (4) est soudée ou collée sur l'insert (2) ou coincée entre l'insert (2) et l'épaulement du boîtier (10).

2. Transmetteur de pression selon la revendication 1, caractérisé en ce que le boîtier (10) présente une forme sensiblement cylindrique et qu'une pluralité d'alésages (3) sont prévus avec une répartition symétrique sur la périphérie.

3. Transmetteur de pression selon la revendication 1 ou 2, caractérisé en ce que l'insert (2) présente une forme sensiblement circulaire et a sur un plan radial à l'extérieur une face supérieure (20) et une face inférieure (22) parallèles et sur un plan radial à l'intérieur une partie allant en se rétrécissant vers la périphérie intérieure.

4. Transmetteur de pression selon la revendication 3, caractérisé en ce que la partie, allant en se rétrécissant en direction de la périphérie intérieure, de l'insert (2) se rétrécit en formant un angle d'environ 20°.

5. Transmetteur de pression selon l'une quelconque des revendications 1 à 4, caractérisé en ce que l'insert (2) présente un noyau (24) et au moins sa surface exposée à l'agent de mesurage une couche de matériau spécial (5).

6. Transmetteur de pression selon l'une quelconque des revendications 1 à 4, caractérisé en ce que l'insert (2) est entièrement à base de matériau spécial.

7. Transmetteur de pression selon l'une quelconque des revendications 1 à 6, caractérisé en ce que l'insert (2) est soudé au moyen d'une soudure d'angle (9) ou collée dans la zone de la transition de la face inférieure (10c) du boîtier (10) à une partie, dépassant axialement, au-dessus du boîtier (10), de l'insert (2).

8. Transmetteur de pression selon l'une quelconque des revendications 1 à 6, caractérisé en ce que l'insert (2) est fixé dans la zone de la transition de la face inférieure (10c) du boîtier (10) à une partie, dépassant axialement du boîtier (10) de l'insert (2) au moyen d'une liaison à bords bridés (9b).

9. Transmetteur de pression selon l'une quelconque des revendications 2 à 8, caractérisé en ce que le diamètre extérieur de l'insert (2) est inférieur au diamètre intérieur qui est formé par les parties de paroi, intérieures sur un plan radial, des alésages (3).

10. Transmetteur de pression selon la revendication 7, caractérisé en ce que la face inférieure (22), dépassant axialement au-dessus du boîtier (10), de l'insert (2) est réalisée comme une surface d'étanchéité.

11. Transmetteur de pression selon l'une quelconque des revendications 1 à 10, caractérisé en ce que le matériau spécial est du titane, du hastelloy, du monel, du nickel, de l'inconell ou du tantale.

12. Transmetteur de pression selon l'une quelconque des revendications 1 à 10, caractérisé en ce que la couche de matériau spécial (5) est à base d'argent, d'or, de polytétrafluoréthylène (Téflon), de PFA ou de ECTFE.
